# EUROPÄISCHE PATENTANMELDUNG

(11) **EP 4 230 412 A1**
(43) Veröffentlichungstag der Anmeldung: **23.08.2023**
(21) Anmeldenummer: 23157282.7
(22) Anmeldetag: 17.02.2023
(51) Int. Cl.: B32B 33/00, B32B 7/02, B32B 7/12, B32B 9/04, B32B 15/04, B32B 27/10, B32B 29/00, B65D 65/40

(54) **VERBUND ZUM VERPACKEN VON NAHRUNGSMITTELN UND VERFAHREN ZU DESSEN HERSTELLUNG**

(30) Priorität: 18.02.2022 DE 102022103957
(71) Anmelder: Constantia Pirk GmbH & Co. KG, 92712 Pirk (DE)
(72) Erfinder: Weiss, Wolfgang, 92637 Weiden (DE); Geitner, Werner, 92637 Weiden (DE); Kick, Markus, 92637 Weiden (DE); Stein, Tobias, 92637 Weiden (DE)
(74) Vertreter: Bittner, Bernhard

(57) **Zusammenfassung**

Verbund (1), bevorzugt zur Verpackung von Lebensmitteln, mit einem Träger (2) der eine erste Oberfläche (2a) und einer der ersten Oberfläche (2a) gegenüberliegende zweite Oberfläche (2b) aufweist, dadurch gekennzeichnet, dass an einer Oberfläche (2b) des Trägers (2) wenigstens eine Klebebeschichtung (4), eine anorganische Beschichtung (6) und eine Lackschicht (8) angeordnet sind und die Klebebeschichtung und/oder anorganische Beschichtung eine Fettbarriere ausbildet.

## Beschreibung

Die vorliegende Erfindung bezieht sich auf einen Verbund und insbesondere einen mehrlagigen Verbund zum Verpacken von Nahrungsmitteln. Derartige Verbünde bzw. Verbundstoffe sind aus dem Stand der Technik seit langem bekannt. Diese Verbundstoffe müssen dabei unterschiedlichsten Kriterien genügen. So ist es gewünscht, dass derartige Verbundstoffe eine hohe Fettbarriere darstellen. Daneben sollen sie teilweise auch lichtblockierend ausgebildet sein.

Insbesondere in jüngerer Zeit wird auch gefordert, dass derartige Verbundstoffe oder Verbünde in zufriedenstellenden Maßen recyclebar sind. Aus dem Stand der Technik sind Papier-Aluminium-Laminate bekannt, die eine dünne Aluminiumschicht aufweisen, die auf einem Papier aufgetragen ist. Diese Laminate können dem Altpapierentsorgungsstrom nicht zugeführt werden, oder bei einem sehr hohen Aluminiumanteil im Aluminiumentsorgungsstrom zugeführt werden. Aus diesem Grund kann nur eine thermische Aufarbeitung eines derartigen Verpackungsmaterials erfolgen.

Diese Produkte werden überwiegend für die Verpackung von Konfekten verwendet, wie beispielsweise Schokoladewürfel, welche in großem Umfang vertrieben werden. Auf diese Weise entsteht eine erhebliche Menge an Verpackungsmüll. Im Markt wird daher ein günstigeres oder besser recyclebares Verpackungsmaterial insbesondere für derartige Nahrungsmittelprodukte wie Schokoladenprodukte gewünscht.

Der vorliegenden Erfindung liegt daher die Aufgabe zugrunde, ein derartiges Verpackungsmaterial insbesondere im Hinblick auf die Recyclingfähigkeit zu verbessern. Daneben soll dieses Verpackungsmaterial insbesondere auch die Beständigkeit des Füllguts von äußeren Einflüssen schützen und zudem eine Kontamination des Verpackungsmaterials vom Füllgut nach außen hin vermeiden.

Diese Aufgaben werden erfindungsgemäß durch die Gegenstände der unabhängigen Patentansprüche gelöst. Vorteilhafte Ausführungsformen und Weiterbildungen sind Gegenstand der Unteransprüche.

Ein erfindungsgemäßer Verbund, bevorzugt zur Verpackung von Lebensmitteln weist einen Träger auf, der eine erste Oberfläche und eine der ersten Oberfläche gegenüberliegende zweite Oberfläche aufweist. Bevorzugt ist der Träger als flächiger und/oder folienartiger Träger ausgebildet und bevorzugt bildet dieser Träger auch eine Trägerschicht aus.

Erfindungsgemäß ist an einer Oberfläche des Trägers (wenigstens mittelbar) zumindest eine Klebebeschichtung, insbesondere eine Barrierebeschichtung und insbesondere eine Barriereklebebeschichtung angeordnet, daneben eine anorganische Beschichtung sowie eine Lackschicht. Weiterhin bildet die Klebebeschichtung (bei der es sich insbesondere um eine Barrierebeschichtung handelt) und/oder die anorganische Beschichtung eine Fettbarriere aus.

Es wird daher ein Verpackungsmaterial vorgeschlagen, welches sich insbesondere zum Verpacken von Lebensmitteln wie beispielsweise Schokolade eignet. Unter einer Fettbarriere bzw. dem Ausbilden einer Fettbarriere wird verstanden, dass das Verpackungsmaterial bzw. der Verbund gängige Tests, welche die Fettbarriereeigenschaften prüfen besteht. Insbesondere handelt es sich dabei um eine Fettbarriere, welche den Palmkernfetttest besteht.

Bei einem derartigen gängigen Test gem. DIN 53116 erfolgt eine Prüfung von Papier, beschichtetem Papier oder Kunststofffolien mit eingefärbtem Palmkernfett. Eine Probe wird auf der Prüfseite mit dem Prüffett eingestrichen, dann werden eine Glasplatte und ggfs. Zusatzgewichte aufgelegt.

Nach Ablauf der Einwirkungsdauer werden die auf dem Anzeigepapier innerhalb der umgrenzten Prüffläche mit bloßem Auge erkennbaren Fettdurchgänge mit einer Größe bis 1,0 mm ausgewertet. Werden nur Fettdurchgänge bis < 1,0 mm beobachtet gilt die Prüfung als bestanden, bei Fettdurchgängen mit einer Größe oberhalb von 1,0 mm ist die Prüfung mit einer milderen Prüfbedingung (einer "schlechteren" Fettdurchlässigkeitsgruppe) durchzuführen. Die Prüfung wird bei Raumklima durchgeführt.

Es wäre dabei möglich, dass die Klebebeschichtung und/oder auch die anorganische Beschichtung bereits für sich genommen ausreichend sind, um den Palmkernfetttest zu bestehen. Besonders bevorzugt wirken jedoch die Klebebeschichtung und die anorganische Beschichtung zusammen, um diesen Effekt zu erreichen.

Bei einer bevorzugten Ausführungsform handelt es sich bei der oben erwähnten Lackschicht um einen Release-Lack. Dieser dient insbesondere für einen Transfervorgang, im Rahmen dessen eine anorganische Beschichtung übertragen wird.

Bevorzugt ist zwischen der Oberfläche und der Klebebeschichtung eine weitere Beschichtung vorgesehen, wobei diese weitere Beschichtung bevorzugt insbesondere an der besagten zweiten Oberfläche angeordnet ist. Bei dieser weiteren Beschichtung kann es sich insbesondere aber nicht ausschließlich um eine Pigment Streichmasse handeln, wobei die Streichmasse und das Auftragsverfahren dem Fachmann aus dem Stand der Technik bekannt sind. Beispielsweise werden Calciumcarbonat, Kaolin, Talkum, gefälltes Calciumcarbonat oder Titandioxid eingesetzt. Diese kann dabei unmittelbar an dem besagten Träger angebracht sein. Alternativ kann es sich bei dieser Beschichtung um eine weitere Barrierebeschichtung handeln (beispielsweise auf Basis von Polyvinylalkohol).

Bei einer bevorzugten Ausführungsform handelt es sich bei der anorganische Beschichtung um eine an der (Barriere-) Klebebeschichtung angebrachte Transferbeschichtung. Als Transferbeschichtung wird insbesondere eine (ein oder mehrlagige) Schicht verstanden, die von einem Träger auf einen anderen Träger übertragbar ist oder übertragen wurde. Insbesondere ist bei dieser Vorgehensweise vorgesehen, dass ein Substrat mit dem Transfermaterial - im vorliegenden Fall ein (halb)metallhaltiges und/oder eine (halb)metalloxidhaltiges Transfermaterial - zumindest abschnittsweise beschichtet und die so (gegebenenfalls nach Aushärtung) gebildete ((halb)metallhaltige und/oder (halb)metalloxidhaltige) Transferbeschichtung zur Anlage (Haftung) an der (Barriere-) Klebebeschichtung gebracht wird. Ein solcher Verbund, umfassend das Substrat und die Transferbeschichtungen, wird im Folgenden auch als Transferfolie bezeichnet. Das Substrat der Transferfolie kann nach dem Aufbringen der Transferbeschichtungen auf das Transferziel von dieser abgezogen werden und wieder für weitere Beschichtungsvorgänge verwendet werden oder einem Recyclingprozess zugeführt werden. Insbesondere verbleibt das Substrat nicht an dem hier beschriebenen Verbund zum Verpacken von Nahrungsmitteln. Weiterhin bleibt bevorzugt auf dem Transferziel nach dem Abziehen des Substrats eine Releaselack-Schicht. Diese ist optional bedruckbar oder in einer anderen aus dem Stand der Technik bekannten Art und Weise veredelbar.

Bei einer weiteren vorteilhaften Ausführungsform weist die anorganische Beschichtung ein (Halb)Metall oder (Halb)Metalloxid auf, um so die Barriereeigenschaften des Verbundes zu erhöhen. In einer weiterhin bevorzugten Ausführungsform umfasst die anorganische Beschichtung Aluminium, Kupfer, Titan, Gold, Silber, Aluminiumoxid (AlOx), Siliziumoxid (SiOx) oder Mischungen hieraus. Als besonders vorteilhaft hat sich Aluminium herausgestellt, da sich dieses Material besonders eignet, um einen später gewünschten optischen Effekt zu erzielen.

Bei einer bevorzugten Ausführungsform weist der Träger (Transferziel) eine Dicke auf, die zwischen 0,5 µm und 200 µm liegt. Besonders bevorzugt weist dieser Träger (Transferziel) eine Dicke auf, die größer ist als 1 µm, bevorzugt größer als 5 µm, bevorzugt größer als 10 µm, bevorzugt größer als 20 µm und bevorzugt größer als 30 µm.

Besonders bevorzugt weist der Träger (Transferziel) eine Dicke auf, die geringer ist als 200 µm, bevorzugt geringer als 150 µm, bevorzugt geringer als 100 µm, bevorzugt geringer als 80 µm, bevorzugt geringer als 70 µm und bevorzugt geringer als 60 µm und bevorzugt geringer als 50 µm.

Der Träger bzw. das Transferziel kann eine Polymerfolie sein oder aufweisen, die bevorzugt ausgewählt ist aus einer Gruppe die PP, PE, Stärkefolie, Zellglas, PA, PBAT, EVOH, PVOH, PS, PLA, PET (bevorzugt < 5 µm), synthetisches Papier (Sylvicta), COC, COP, PEEK, EVA, PVC, PC umfasst.

Die Anmelderin hat ermittelt, dass insbesondere mit diesen Dicken einerseits sehr gute Barriereeigenschaften erreicht werden, andererseits jedoch auch noch eine günstige Verarbeitbarkeit gegeben ist.

Bei einer weiteren bevorzugten Ausführungsform ist der Träger aus Papier und besonders bevorzugt aus Kraftpapier hergestellt. Besonders bevorzugt weist dieser Träger und insbesondere das Papier ein Flächengewicht auf, welches zwischen 10 g/m² und 90 g/m², bevorzugt zwischen 45 g/m² und 80 g/m² und besonders bevorzugt zwischen 62 g/m² und 75 g/m² liegt. Denkbar sind hier alle industriell verwertbaren, bekannten Papiere inklusive synthetischer Papiere.

Die Anmelderin hat ermittelt, dass ein spezieller Transferprozess der anorganischen Beschichtung sich bevorzugt für die hier beschriebene Anwendung und die Herstellung des Verbunds eignet. Dabei wird besonders bevorzugt als Transferfolie eine anorganisch beschichtete PET-Folie, insbesondere mit einer Dicke zwischen 8 µm und 16 µm bevorzugt 10 µm und 14 µm und besonders bevorzugt von ca. 12 µm verwendet. Bevorzugt weist diese Transferfolie eine optische Dichte auf, die ≥ 2,0, bevorzugt ≥ 2,1 liegt und insbesondere bevorzugt ≥ 2,2 ist. Besonders bevorzugt ist diese Folie mit einer Lockerungsbeschichtung (Release coating) versehen, um den Transferprozess der anorganischen Beschichtung durchzuführen oder zu vereinfachen.

Bevorzugt ist die Transferbeschichtung gegenüber Papier durch lösungsmittelbasierte oder lösemittelfreie (Barriere-) Kleber laminiert. Dieser (Barriere-) Kleber d.h. insbesondere die oben erwähnte Barriere-(klebe-)beschichtung kann bereits zu einer anorganisch beschichteten Mono-Papierbarriere führen (insbesondere nach der Entfernung des Substrats (beziehungsweise der PET-Schicht), beispielsweise durch ein Bahnwickelverfahren (Web-Winding-Process)).

Der resultierende anorganisch beschichtete Verbund, beispielsweise ein anorganisch beschichteter Monopapierverbund weist nicht nur einen sehr glänzenden durch die anorganische Beschichtung erzeugten Effekt auf, der insbesondere auch frei von sichtbaren Defekten ist, sondern auch einen hohen Widerstand gegen Fett und/oder Mineralöl-Migration. Daneben bietet dieser Verbund auch den Vorteil einer Lichtbarriere sowie (zusätzlich oder alternative) guter Falteigenschaften.

Eine entsprechende (Barriere-) Klebeschicht bewirkt darüber hinaus auch eine gewisse Sauerstoffbarriere und weist auch Aroma-Barriereeigenschaften durch sich selbst auf. Diese Effekte werden noch durch die Kombination mit der anorganischen Beschichtung verbessert.

Durchgeführte Palmkernfetttests zeigen, dass ein wie oben beschriebener Verbund diesen Test besteht und dabei meist sogar absolut kein Fett durch die anorganisch beschichtete Seite des Monopapiers migriert. Anders als bei aus dem Stand der Technik bekannten metallisierten Papieren ist bei dem wie oben beschriebenen Verbund und die zwischen der (anorganischen beziehungsweise (halb-)metallhaltigen) Transferbeschichtung und dem Trägerpapier liegende Barriereschicht sichergestellt, dass die Papierfasern im Wesentlichen von der anorganischen beziehungsweise (halb-)metallhaltigen Beschichtung beabstandet sind. Auf diese Weise wird erreicht, dass die papierbasierte Trägerstruktur nicht direkt mit der anorganischen Beschichtung, wie einem Metall, beispielsweise Aluminium, unter Ausbildung einer damit unlösbar verbundenen anorganischen Beschichtung verbunden ist. Dadurch ist bei dem wie oben beschriebenen Verbund das Recycling der Zellulosefasern im üblichen Papierrecyclingprozess ermöglicht. Die Papierfasern können vollständig von der anorganischen Beschichtung gelöst werden. Um das Herauslösen der Zellulosefasern zu begünstigen ist insbesondere bevorzugt, dass keine Beschichtung auf der inneren bzw. der in Kontakt mit dem Nahrungsmittel stehenden Seite angeordnet ist, um über diese Seite das Papier für Lösungsmittel zugänglich zu halten.

Bei einer bevorzugten Ausführungsform kann die (halb)metallhaltige und/oder (halb)metalloxidhaltige Transferbeschichtung auch Designelemente aufweisen, wie beispielsweise eine (lediglich) partielle anorganische Beschichtung und/oder verschiedene Hologramme. Ebenfalls wäre eine Strukturierung (beispielsweise durch unterschiedliche Farben) des Releaselacks denkbar, welcher nach Übertragung der Transferbeschichtung als sichtbare Außenfläche der Verpackung erkennbar sein könnte. Derartige graphische Gestaltungen und/oder Hologramme können hilfreich sein, um ein von einem solchen Verbund umhülltes Produkt zu kennzeichnen oder zum Schützen von Marken (beispielsweise in der Art eines Nachahmungsschutzes). Wie aus obigen Ausführungen hervorgeht ist der Transferprozess nicht auf homogene (halb)metallhaltige und/oder (halb)metalloxidhaltige Transferbeschichtungen beschränkt.

Wie erwähnt, kann das Substrat der Transferfolie (PET-Material) wieder für weitere anorganische Beschichtungsprozesse verwendet werden. Die Kosten für die Transfer-Beschichtung werden deutlich reduziert, um bei günstigen Strukturen des Produktes niedrigere Kosten gegenüber dem Stand der Technik zu erreichen.

Bei einer bevorzugten Ausführungsform weist der Verbund bei 23°C und 50 % Luftfeuchtigkeit eine Wasserdampfdurchlässigkeit auf, die geringer ist als 20 g/m²Tag, bevorzugt kleiner als 15 g/m²Tag, bevorzugt kleiner als 10 g/m²Tag, bevorzugt geringer als 8 g/m²Tag, besonders bevorzugt kleiner als 6 g/m²Tag und besonders bevorzugt kleiner als 4 g/m²Tag.

Bei einer weiteren vorteilhaften Ausführungsform weist der Verbund bei 23°C und 85 % Luftfeuchtigkeit eine Wasserdampfdurchlässigkeit auf, die geringer ist als 20 g/m²Tag, bevorzugt kleiner als 15 g/m²Tag, bevorzugt kleiner als 10 g/m²Tag, bevorzugt kleiner als 8 g/m²Tag, bevorzugt kleiner als 6 g/m²Tag und besonders bevorzugt kleiner als 5 g/m²Tag. Dabei beruhen diese Messergebnisse bevorzugt auf Messungen gemäß DIN EN ISO 15106-3.

Bevorzugt weist der Verbund bei einem Messverfahren in Anlehnung an DIN 53380-3 und bei 23°C und 50 % Luftfeuchtigkeit eine Sauerstoffdurchlässigkeit (OTR, Oxygen transmission rate) auf, die geringer ist als 20 g/m²Tag, bevorzugt geringer als 15 g/m²Tag, bevorzugt kleiner als 10 g/m²Tag und bevorzugt kleiner als 9 g/m²Tag.

Bei einer bevorzugten Ausführungsform weist die (Barriere-) Klebebeschichtung ein Auftragsgewicht auf, welches größer ist als 1 g/m² bevorzugt größer als 2 g/m² und besonders bevorzugt größer als 3 g/m².

Bei einer bevorzugten Ausführungsform weist die (Barriere-) Klebebeschichtung ein Auftragsgewicht auf, welches geringer ist als 10 g/m², bevorzugt geringer als 8 g/m², bevorzugt geringer als 6 g/m² und besonders bevorzugt geringer als 5 g/m².

Bei einer weiteren bevorzugten Ausführungsform enthält die (Barriere-) Klebebeschichtung einen Klebstoff auf Basis von Polyesterpolyurethan.

Besonders bevorzugt umfasst dieser Klebstoff eine Polyesterpolyol-Komponente und eine Polyisocyanat-Komponente, und kann als 2-Komponenten-Klebstoff an Kaschieranlagen verarbeitet werden. Diese Polyisocyanat-Komponente enthält bevorzugt zwei oder mehr Isocyanat-Gruppen in einem Molekül, beispielsweise Hexamethylendiisocyanat oder Xylylendiisocyanat beziehungsweise Dimere, Trimere und/oder Addukte daraus, weiterhin können auch geblockte Isocyanate verwendet werden.

Die Polyesterpolyol-Komponente wird bevorzugt als Reaktionsprodukt erzeugt durch eine chemische Reaktion mindestens eines mehrwertigen Alkoholes, beispielsweise Ethylenglykol oder Glycerol, oder eines bereits vorpolymerisierten Polyesterpolyols, welches drei oder mehr Hydroxyl-Gruppen enthält, insbesondere mit mindestens einem Carbonsäureanhydrid oder einer polyvalenten Polycarbonsäure. Diese polyvalente Carbonsäure umfasst bevorzugt ortho-Phthalsäure und/oder ortho-Phthalsäureanhydrid. Als weiteres Carbonsäureanhydrid kann beispielsweise auch Maleinsäureanhydrid verwendet werden. Das Polyesterpolyol kann des Weiteren einen Isocyanuratring umfassen.

Das mittlere Molekulargewicht des Polyesterpolyols beträgt zwischen 300 und 5000 g/mol. Die Glasübergangstemperatur des Polyesterpolyols beträgt zwischen - 30°C und 80°C. Bezüglich der oben verwendeten Formulierung "zwischen Wert 1 und Wert 2" wird darauf hingewiesen, dass im Rahmen dieser Erfindung auch bei den folgenden Verwendungen einer solchen Formulierung die gennannten Grenzwerte - sofern nicht explizit anders angegeben - als von diesem Bereich eingeschlossen verstanden werden sollen.

Das Polyesterpolyol kann durch Reaktion mit einem Diisocyanat zu einem Polyester-Polyurethanpolyol umgesetzt werden, welches bevorzugt ein mittleres Molekulargewicht von 1000 bis 15000 g/mol aufweist. Die Mischungsverhältnisse der Polyol-Komponente mit der Polyisocyanat-Komponente werden vorzugsweise so gewählt, dass nach vollständiger Reaktion der Isocyanatgruppen beziehungsweise Aushärtung keine migrationsfähigen Isocyanate mehr aus dem Klebstofffilm heraus migrieren können.

Des Weiteren kann bevorzugt der Klebstoff Additive, beispielsweise Katalysatoren welche die Isocyanat-Reaktion beziehungsweise Aushärtung beschleunigen, und anorganische Füllstoffe, beispielsweise Kieselsäure, Montmorillonit oder Talkum, sowie Tackifier, beispielsweise Kolophoniumharz, enthalten. Der fertig gemischte Klebstoff kann entweder als lösemittelhaltiger Klebstoff, vorzugsweise in Ethylacetat oder Methylethylketon gelöst, oder als lösemittelfreier Klebstoff mittels Trockenkaschierverfahren, welche aus dem Stand der Technik bekannt sind, verarbeitet werden.

Bei einer weiteren vorteilhaften Ausführungsform weist der Verbund ein anorganisch transferbeschichtetes transparentes Papier (als Träger) auf, wobei bevorzugt ein Glanzwert des Verbunds in Maschinenrichtung zwischen 250 und 300, bevorzugt zwischen 260 und 290 und bevorzugt zwischen 270 und 280 liegt.

Bei einer weiteren vorteilhaften Ausführungsform weist der Verbund ein anorganisch transferbeschichtetes transparentes Papier (als Träger) auf, wobei ein Glanzwert der metallisierten Seite des Verbundes in Transversalrichtung zwischen 200 und 270, bevorzugt zwischen 210 und 260, bevorzugt zwischen 220 und 250 und bevorzugt zwischen 230 und 240 liegt.

Bei einer weiteren vorteilhaften Ausführungsform weist der Verbund ein anorganisch transferbeschichtetes weißes Papier (als Träger) auf, wobei bevorzugt ein Glanzwert der metallisierten Seite des Verbundes in Maschinenrichtung zwischen 840 und 930, bevorzugt zwischen 860 und 910 und besonders bevorzugt zwischen 870 und 900 liegt.

Bei einer weiteren vorteilhaften Ausführungsform weist der Verbund ein anorganisch transferbeschichtetes weißes Papier (als Träger) auf, wobei ein Glanzwert des Verbundes in Transversalrichtung zwischen 740 und 800, bevorzugt zwischen 750 und 790, bevorzugt zwischen 760 und 780 und besonders bevorzugt zwischen 770 und 778 liegt.

Bevorzugt wird dabei der Glanzwert mit Verfahren gem. DIN EN ISO 2813 gemessen, wobei bevorzugt unter einem Winkel von 20° gemessen wird. Daneben kann auch gem. ASTM D523 gemessen werden. Der oben für die verschiedenen Ausführungsformen erreichbare hohe Glanz des Verbundes kann damit begründet werden, dass die (halb)metallhaltige und/oder (halb)metalloxidhaltige Beschichtung nicht auf dem Papier erzeugt wird, sondern erst nach der Ausbildung auf das (Träger-) Papier übertragen wird. Unebenheiten, die im Papier beispielsweise durch die im Wesentlichen zufällige Anordnung der Zellulosefasern auftreten können, werden somit nicht auf die Oberfläche der (halb)metallhaltigen und/oder (halb)metalloxidhaltigen Beschichtung übertragen. Die (halb)metallhaltige und/oder (halb)metalloxidhaltige Oberfläche kann daher besonders homogen ausgebildet sein, was den Glanz erhöht.

Die vorliegende Erfindung ist weiterhin auf ein Verfahren zum Herstellen eines Verbundes insbesondere zur Verpackung von Lebensmitteln und insbesondere eines Verbundes der oben beschriebenen Art gerichtet. Dabei wird in einem ersten Verfahrensschritt ein Substrat mit einer daran angeordneten anorganisch beschichteten Transferbeschichtung zur Verfügung gestellt. Bevorzugt handelt es sich bei der anorganisch beschichteten Transferbeschichtung um eine anorganisch beschichtete Transferbeschichtung, die mittels eines Lackes (Transferlack, Release-Lack) auf dem Substrat fixiert ist. Der gesamte Aufbau wird als Transferfolie bezeichnet.

In einem weiteren Verfahrensschritt wird das Substrat mit der daran angeordneten Transfer-beschichtung an einem (bevorzugt papierhaltigen) Träger angeordnet und insbesondere befestigt (mit Klebstoff laminiert), um einen Zwischenverbund auszubilden. In einem weiteren Verfahrensschritt wird das Substrat von dem Zwischenverbund getrennt bzw. entfernt, insbesondere, um so den oben genannten Verbund herzustellen.

Bei einem bevorzugten Verfahren wird die an dem Substrat angeordnete anorganische Beschichtung auf die auf dem Träger angeordnete Klebeschicht übertragen bzw. transferiert.

Es wird daher auch verfahrensseitig vorgeschlagen, dass der hier beschriebene Verbund durch ein Transferverfahren, bei dem eine (halb)metallhaltige und/oder (halb)metalloxidhaltige Schicht übertragen wird, hergestellt wird. Auf diese Weise kann auf die direkte Vakuum-Metallisierung und/oder -Beschichtung eines papierbasierten Trägers verzichtet werden und so die Recyclingfähigkeit des hergestellten Verbundes verbessert werden.

Bei einem weiteren bevorzugten Verfahren wird der genannte Zwischenverbund kaschiert.

Bei einem weiteren bevorzugten Verfahren wird zunächst ein Substrat mit einem Lack und insbesondere mit einem Release-Lack beaufschlagt und/oder ein Release-Lackfilm auf dem Substrat angebracht. Bevorzugt handelt es sich bei dem Substrat um ein Kunststoffsubstrat und insgesamt besonders um ein PET-Substrat.

Besonders bevorzugt wird zum Beaufschlagen dieses Substrat mit dem Release-Lackfilm eine Tauchwalze durch ein Behältnis mit Release-Lack geführt und anschließend, insbesondere mittels einer Übertragungswalze, der Release-Lack auf dem Substrat aufgetragen. Bei einem weiteren bevorzugten Verfahren wird anschließend das Substrat mit dem daran angeordneten Release-Lackfilm getrocknet.

Bei einem weiteren bevorzugten Verfahren kann eine Corona- bzw. Flamm-Vorbehandlung des Substrats und/oder des mit dem Lackfilm versehenen Substrats vorgenommen werden. Bei einem bevorzugten Verfahren wird als Release-Lack ein lösemittelhaltiger Lack auf Basis von Reinacrylat verwendet. Daneben kann auch ein Vinyl-Chlorid-Copolymer haltiger Lack verwendet werden.

Bei einem bevorzugten Verfahren wird das mit dem Release-Lack versehene Substrat mit einem anorganischen Material wie beispielsweise einem Metall und insbesondere mit Aluminium, bedampft. Dabei findet bevorzugt dieses bedampfen innerhalb einer Vakuumkammer statt. Bei einem bevorzugten Verfahren wird das anorganischen Material, welches vorzugsweise ein Metall und/oder Metalloxid enthält, auf das Substrat aufgedampft.

Zu diesem Zweck kann das mit dem Release-Lack versehene Substrat auf der Releaselack Oberfläche mit Aluminium bedampft werden. Zu diesem Zweck ist es beispielsweise möglich, mit einem aus dem Stand der Technik bekannten Verfahren, Aluminium zu verdampfen.

Bei einem weiteren bevorzugten Verfahren kann eine Hologrammfolie die anorganische Beschichtung ausbilden oder die anorganische Beschichtung Hologramme umfassen. Ergänzend oder alternativ dazu kann auch der Release-Lack selbst eine (beispielsweise farbliche) Strukturierung beispielsweise in Form von Schrift oder Abbildungen aufweisen. Die anorganische Beschichtung kann anstelle des Aluminiums weitere farbgebende Komponenten wie beispielsweise Metalle wie beispielsweise Kupfer umfassen.

Bei einem weiteren bevorzugten Verfahren wird an dem Träger eine Klebebeschichtung angeordnet. So ist es beispielsweise möglich, dass ein Träger wie beispielsweise Kraftpapier mit einem Klebstoff beschichtet wird. Bevorzugt wird auch hier eine Tauchwalze durch ein Behältnis mit Klebstoff geführt und eine Auftragswalze überträgt diesen Klebstoff auf die Oberfläche des Trägers. Bevorzugt wird der mit dem Klebstoff versehene Träger anschließend im Heißluftkanal getrocknet.

In einem weiteren Verfahrensschritt wird die anorganische Beschichtung von dem Substrat auf den Träger (und insbesondere an die auf dem Träger angeordnete Klebeschicht) übertragen. Dabei ist es möglich, dass einem Kaschierwerk einerseits das oben erwähnte Substrat mit der anorganischen Beschichtung als auch der mit dem Klebstoff beschichtete Träger zugeführt wird und in diesem Prozess, beispielsweise über zwei Walzen die anorganische Beschichtung auf den Träger kaschiert wird.

Besonders bevorzugt handelt es sich bei dem Klebstoff um einen Barriereklebstoff. So kann es sich beispielsweise bei dem Klebstoff um 2K Polyurethan handeln. Besonders bevorzugt handelt es sich bei dem Klebstoff um einen Klebstoff, der bei Raumtemperatur aushärtet. Auf diese Weise wird eine Transferbeschichtung aufgetragen.

Bei einem weiteren Verfahrensschritt wird von dem Zwischenverbund das Substrat wieder abgetrennt. Dieses kann bevorzugt wieder weiterverwendet werden. Bei einem besonders bevorzugten Verfahren handelt es sich bei den Release-Lack um einen bedruckbaren Release-Lack. Auf diese Weise können später auch Logos oder Marken aufgedruckt werden oder diese bereits aufgedruckt sein.

Das hier beschriebene Verfahren erlaubt einen 100 %-igen Transfer der anorganischen Beschichtung von dem Substrat auf den Träger. Insbesondere verbleiben keine Rückstände der anorganischen Beschichtung. Im Ergebnis ergibt sich eine homogene und glänzende Oberfläche.

Weiterhin zeichnet sich das Produkt durch eine hohe Fettdichtigkeit auf, welche insbesondere auch durch den Barriereklebstoff bzw. die Barriereklebstoffschicht gegeben ist. Daneben ergibt sich auch eine hohe optische Dichte.

Bei einer bevorzugten Variante kann auf dem Verbund noch zusätzlich ein Barrierelack aufgetragen sein um die Barriereeigenschaften weiter zu verbessern. Solche Barrierelacke sind aus Stand der Technik bekannt, zum Beispiel auf Basis von Polyvinylalkohol. Die Auftragsgewichte (Trockengrammatur) dieser Lacke beträgt zwischen 0,1 - 20 g/m², bevorzugt zwischen 1 - 10 g/m², besonders bevorzugt zwischen 2 - 6 g/m². Dadurch können die Barrierewerte für Sauerstoff- und Wasserdampfdurchlässigkeit des Verbundes verbessert werden. Die Applikationsverfahren sind dem Fachmann aus dem Stand der Technik bekannt.

Weiterhin zeichnet sich das Produkt durch seine gute Falteigenschaften aus. Bei einer bevorzugten Anwendung wird der erfindungsgemäße Verbund eng an die Konturen eines verpackenden Füllguts angelegt, um das Gas-Volumen zwischen Verpackung und Füllgut möglichst gering zu halten. In einer bevorzugten Ausführungsform weist der Verbund daher einen Rückstellwinkel auf, der im Bereich zwischen 8° und 15° liegt. Der Knickwinkel wurde mittels folgendem Versuchsaufbau gemessen. Zunächst wurden bei Raumtemperatur Muster in eine Größe von 5 cm Breite und 10 cm Länge (entspricht MD) zugeschnitten. Anschließend wurden die Muster mit Hilfe eines 500 g schweren Gewichts um 180° nach innen und somit in CD gefaltet, und der Rückstellwinkel gemessen. Die Größe des Winkels hängt von der Faltbarkeit des Verbunds ab. Je kleiner der gemessene Rückstellwinkel, desto besser die Falteigenschaft des Verbundes.

Weitere Vorteile und Ausführungsformen ergeben sich aus den beigefügten Zeichnungen:
Darin zeigen:
- Fig. 1: eine schematische Darstellung eines erfindungsgemäßen Verbunds;
- Fig. 2: eine Veranschaulichung der Herstellung eines mit einer Klebebeschichtung versehen Substrats;
- Fig. 3: eine schematische Darstellung des mit der Klebebeschichtung versehenen Substrats;
- Fig. 4: eine Darstellung zur anorganischen Beschichtung des Substrats;
- Fig. 5: eine Darstellung des anorganisch beschichteten Substrats;
- Fig. 6: eine Darstellung zur Beschichtung des Trägers mit einem (Barriere-) Klebstoff;
- Fig. 7: eine Darstellung zum Transfer der anorganischen Beschichtung auf den Träger;
- Fig. 8: eine Darstellung des Zwischenverbunds;
- Fig. 9: eine Darstellung zur Entfernung des Substrats; und
- Fig. 10: eine Darstellung des Verbunds.

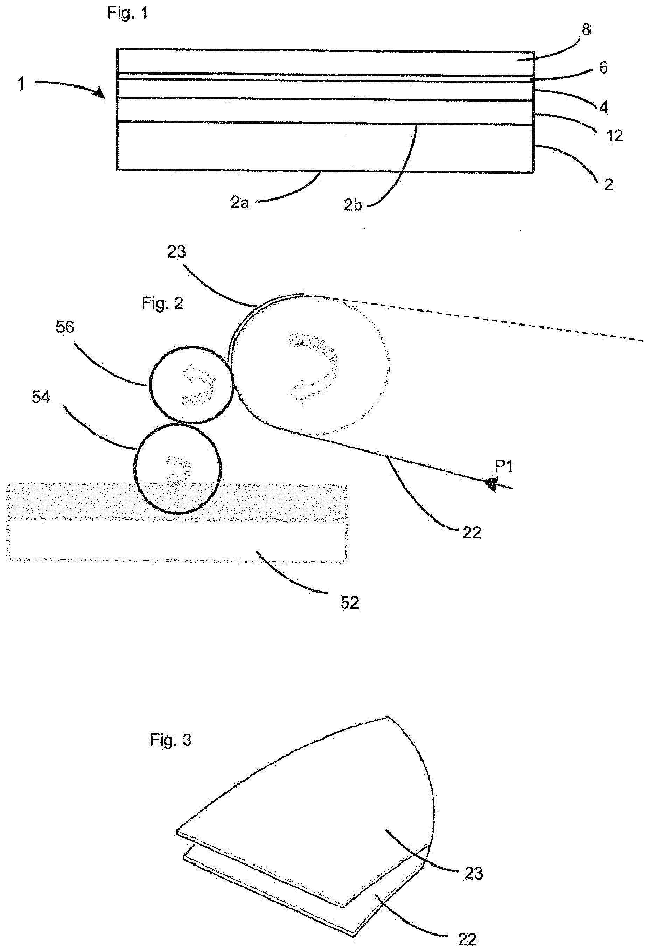

Figur 1 zeigt eine Darstellung eines Verbunds 1. Dieser Verbund 1 weist einen Träger 2 auf, der eine erste Oberfläche 2a und eine zweite Oberfläche 2b aufweist. In einem Verpackungszustand ist diese erste Oberfläche 2a dem zu verpackenden Produkt, wie beispielsweise einem Schokoladewürfel zugewandt, optional kann sich auf dieser Oberfläche 2a eine weitere funktionelle Beschichtung zum Beispiel eine Heißsiegellackbeschichtung, eine Kaltsiegelbeschichtung oder eine Hotmeltbeschichtung befinden, wobei diese Beschichtungen insbesondere partiell aufgetragen werden. Weiterhin kann diese Oberfläche mit einem Kaschierleim gegen ein weiteres Papier oder gegen den Verbund 1 kaschiert werden.

An diesem Träger 2 kann sich optional eine Beschichtung 12 befinden, wie insbesondere aber nicht ausschließlich eine Streichmasse (clay - coating) oder eine Barrierebeschichtung zum Beispiel auf Polyvinylalkohol- oder Akrylatbasis. Es ist jedoch auch möglich, dass der Träger 2 gemeinsam mit dieser Beschichtung ausgeführt ist. An dieser Beschichtung 12 ist eine Klebstoffschicht 4, insbesondere ein Barriereklebstoff 4 angeordnet. Dieser (Barriere-) Klebstoff 4 ist bevorzugt angrenzend an eine anorganische Beschichtung 6 aufgebracht.

Das Bezugszeichen 8 kennzeichnet den Release-Lack, der bei der Übertragung der Beschichtung vorhanden ist. Auf der Oberfläche von 8 kann optional ein Barrierelack oder eine Extrusionsbeschichtung aufgebracht werden.

Optional ist es möglich, dass auf die Oberfläche 2a eine Heißsiegellack- und/oder eine drucksensitive Kaltsiegelmasse aufgetragen wird.

Weiterhin kann bevorzugt zwischen der Heißsiegellackschicht und der Oberfläche 2a ein Primer (typischer Trocken-Grammaturbereich 0,1 g/m² - 5 g/m²) aufgetragen werden.

Bevorzugt weisen die einzelnen Schichten ein Auftragsgewicht zwischen 1 und 10 g/m² auf.

Figur 2 zeigt einen ersten Verfahrensschritt zur Herstellung der Transferfolie. Dabei wird ein Substrat 22 zugeführt und mittels einer Tauchwalze 54 wird aus einem Behältnis 52 Release-Lack entnommen und über eine Übertragungswalze 56 auf dieses Substrat 22 aufgetragen.

Es ergibt sich auf diese Weise ein Substrat 22, welches mit dem Release-Lack 23 versehen ist (vgl. Fig. 3). Wie oben erwähnt, kann in diesem Verfahrensschritt auch eine Flammvorbehandlung beispielsweise der Substratoberfläche vorgenommen werden.

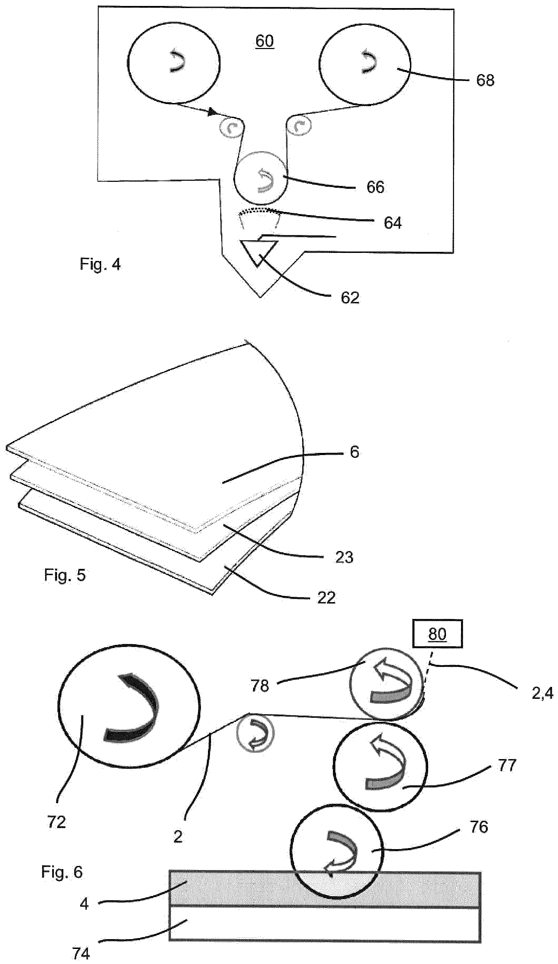

Figur 4 zeigt einen weiteren Verfahrensschritt, der bevorzugt in einem Vakuum 60 stattfindet. Dabei wird das Substrat 22 mit dem Release-Lack 23, in diesem Fall beispielsweise eine PET-Folie mit 12 µm Dicke mit einer anorganischen Substanz wie im vorliegenden Beispiel Aluminium bedampft. Zu diesem Zweck ist eine Heizeinrichtung wie ein beheiztes Schiffchen 62 mit Aluminiumdrahtzuführung vorgesehen, der Aluminiumdraht wird auf dem Schiffchen zum Schmelzen gebracht. Über eine Dampfkeule 64 wird durch Kondensation auf dem Substrat die Metallbeschichtung aufgebracht, hierbei wird die Prozesswalze 66 gekühlt. Schließlich wird das so beschichtete Substrat auf eine Rolle 68 aufgewickelt. Der Beschichtungsvorgang findet im Hochvakuum in einer Metallisierungskammer statt.

Auf diese Weise ergibt sich das in Figur 5 dargestellte Zwischenprodukt aus dem Substrat 22, dem Release-Lack 23 und der anorganischen Beschichtung 6 beziehungsweise Metallisierung 6.

Figur 6 zeigt einen weiteren Verfahrensschritt zur Herstellung des erfindungsgemäßen Produktes. Dieser Schritt kann bevorzugt unabhängig von den oben gezeigten Schritten durchgeführt werden. Dabei wird von einer Rolle 72 ein Primärmaterial beispielsweise Kraftpapier 2 abgewickelt. Dieses Kraftpapier wird mit einem (Barriere-) Klebstoff 4 beaufschlagt.

Auch zu diesem Zweck wird einem Behältnis 74 mit (Barriere-) Klebstoff über eine Tauchwalze 76 und eine Übertragungswalze 77 dieser (Barriere-) Klebstoff entnommen und auf dem Träger 2 aufgebracht. Das Bezugszeichen 78 kennzeichnet eine weitere Transportwalze, welche den Träger von der Abwicklung zum Auftragswerk in den Beschichtungsspalt weitertransportiert. Das Bezugszeichen 80 kennzeichnet eine Transport- beziehungsweise Gegendruckwalze, welche den mit dem (Barriere-) Klebstoff beschichteten Träger weitertransportiert.

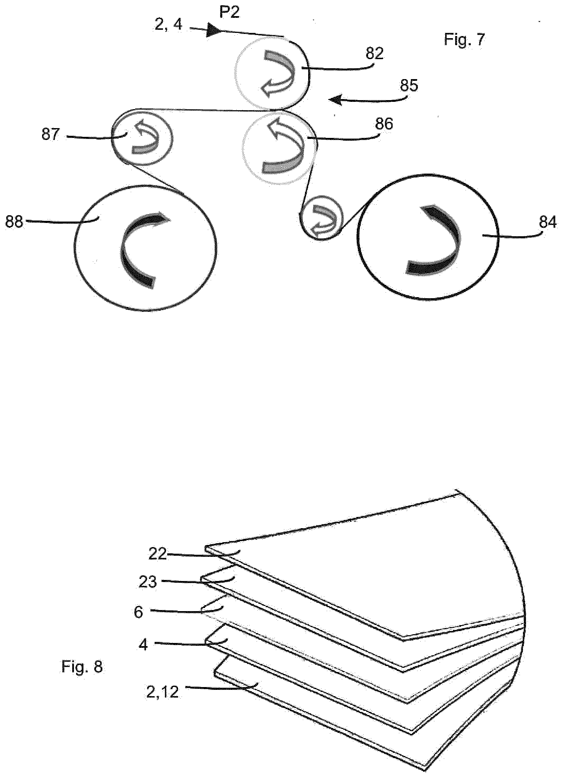

Figur 7 veranschaulicht den Transfer der anorganischen Beschichtung 6 auf das mit dem (Barriere-) Klebstoff versehene Kraftpapier. Dabei wird (vergleiche Pfeil P2) der mit dem (Barriere-) Klebstoff beschichtete Träger über eine Walze 82 geführt. Weiterhin wird, ausgehend von einer Abwicklung von einer Rolle 84 die anorganische Beschichtung mittels einer weiteren Transferwalze 86 in den Kaschierspalt zwischen Walze 82 und 86 geführt und in der in seiner Gesamtheit als Kaschierwerk 85 bezeichneten Anordnung mit dem (Barriere-) Klebstoff beschichteten Träger durch Druckeinwirkung auf die beiden Bahnen verbunden. Die mit dem (Barriere-) Klebstoff versehende Oberfläche befindet sich im Kontakt mit der anorganischen Beschichtung des Trägers. Anschließend wird das so gefertigte Laminat über eine Rolle 87 an eine Aufwickelrolle 88 übergeben.

Figur 8 kennzeichnet den so entstehenden Zwischenverbund. Dieser weist zunächst den Träger 2 auf, an dem eine Beschichtung 12 angeordnet sein kann. Daran schließt sich der (Barriere-) Klebstoff 4 mit der anorganischen Beschichtung 6 an. An diesen wiederum schließt sich eine Lackschicht 23 (insbesondere der Releaselack) und schließlich das Substrat 22 an.

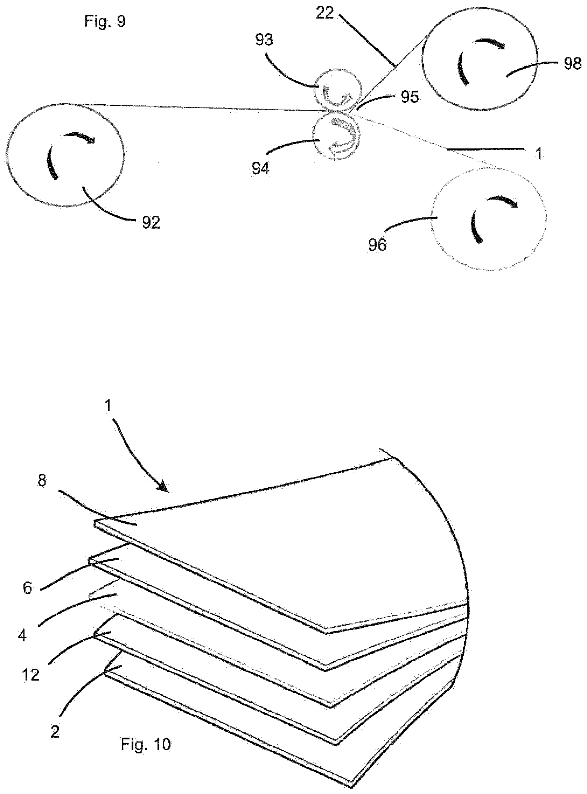

Figur 9 kennzeichnet die Trennung des Substrats 22 von dem Zwischenverbund. Hierbei wird über eine Rolle 92 der Zwischenverbund abgewickelt und mittels eines Trennmechanismus, der von zwei Walzen 93 und 94 und einem Trennspalt 95 gebildet wird, wird das Substrat 22 von dem Verbund 1 abgezogen. Das Substrat 22 wird wiederum auf eine Rolle 98 aufgewickelt und kann wiederverwendet werden. Der Verbund 1 kann auf eine Rolle 96 aufgewickelt werden.

Figur 10 zeigt wiederum den in der Gesamtheit entstehenden Verbund 1. Dieser setzt sich aus dem Träger 2, einer daran angeordneten Beschichtung 12 wie einer Streichmasse, der (Barriere-) Klebeschicht 4 mit der anorganischen Beschichtung 6 und schließlich dem Release-Lack 8 zusammen. Weiterhin können noch, wie oben erwähnt, Hologrammschichten und dergleichen (nicht gezeigt), sowie weitere funktionelle Beschichtungen (ebenfalls nicht gezeigt) vorgesehen sein.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verbund (1), bevorzugt zur Verpackung von Lebensmitteln, mit einem Träger (2) der eine erste Oberfläche (2a) und einer der ersten Oberfläche (2a) gegenüberliegende zweite Oberfläche (2b) aufweist,
**dadurch gekennzeichnet, dass**
an einer Oberfläche (2b) des Trägers (2) wenigstens eine Klebebeschichtung (4), eine anorganische Beschichtung (6) und eine Lackschicht (8) angeordnet sind und die Klebebeschichtung (4) und/oder anorganische Beschichtung (6) eine Fettbarriere ausbildet.

2. Verbund (1) nach Anspruch 1,
**dadurch gekennzeichnet, dass**
zwischen der Oberfläche (2b) und der Klebebeschichtung (4) eine weitere Beschichtung (12) vorgesehen ist, wobei diese weitere Beschichtung (12) insbesondere an der Oberfläche (2b) angeordnet ist.

3. Verbund (1) nach wenigstens einem der vorangegangenen Ansprüche,
**dadurch gekennzeichnet, dass**
die anorganische Beschichtung eine an der Klebebeschichtung (4) angebrachte Transferbeschichtung ist.

4. Verbund (1) nach wenigstens einem der vorangegangenen Ansprüche,
**dadurch gekennzeichnet, dass**
die anorganische Beschichtung mindestens eine Substanz enthält, die ausgewählt aus einer Gruppe, die ein Metall, ein Halbmetall, ein Metalloxid, ein Halbmetalloxid, Aluminium, Kupfer, Titan, Gold, Silber, AlOx, SiOx, oder Mischungen hieraus umfasst.

5. Verbund (1) nach wenigstens einem der vorangegangenen Ansprüche,
**dadurch gekennzeichnet, dass**
der Träger (2) eine Dicke aufweist, die zwischen 0,5µm und 200µm, bevorzugt zwischen 5 µm und 150 µm, bevorzugt zwischen 20 µm und 100 µm und besonders bevorzugt zwischen 30 µm und 80 µm liegt.

6. Verbund (1) nach wenigstens einem der vorangegangenen Ansprüche,
**dadurch gekennzeichnet, dass**
der Träger (2) aus Papier hergestellt ist und bevorzugt das Papier ein Flächengewicht aufweist, welches zwischen 10g/m² und 90g/m², bevorzugt zwischen 45 g/m² und 80 g/m² und besonders bevorzugt zwischen 62 g/m² und 75 g/m² liegt.

7. Verbund (1) nach wenigstens einem der vorangegangenen Ansprüche,
**dadurch gekennzeichnet, dass**
der Verbund (1) bei 23°C und 50% Luftfeuchtigkeit eine Wasserdampfdurchlässigkeit aufweist, die geringer ist als 20 g/m²Tag, bevorzugt kleiner als 15 g/m²Tag, bevorzugt kleiner als 10 g/m²Tag, bevorzugt kleiner als 8 g/m²Tag, bevorzugt kleiner als 6 g/m²Tag und besonders bevorzugt kleiner als 4g/m²Tag und/oder der Verbund (1) bei 23°C und 85% Luftfeuchtigkeit eine Wasserdampfdurchlässigkeit aufweist, die geringer ist als 20 g/m²Tag, bevorzugt kleiner als 15 g/m²Tag, bevorzugt kleiner als 10 g/m²Tag, bevorzugt kleiner als 8 g/m²Tag, bevorzugt kleiner als 6 g/m²Tag und besonders bevorzugt kleiner als 5 g/m²Tag.

8. Verbund (1) nach wenigstens einem der vorangegangenen Ansprüche,
**dadurch gekennzeichnet, dass**
der Verbund (1) bei 23°C und 50% Luftfeuchtigkeit eine Sauerstoffdurchlässigkeit aufweist, die geringer ist als 20 g/m²Tag, bevorzugt kleiner als 15 g/m²Tag, bevorzugt kleiner als 10 g/m²Tag, bevorzugt kleiner als 9 g/m²Tag.

9. Verbund (1) nach wenigstens einem der vorangegangenen Ansprüche,
**dadurch gekennzeichnet, dass**
die Klebebeschichtung (4) ein Auftragsgewicht aufweist, welches größer ist als 1g/m², bevorzugt größer als 2 g/m² und besonders bevorzugt größer als 3 g/m² und/oder die Klebebeschichtung (4) ein Auftragsgewicht aufweist, welches geringer ist als 10 g/m², bevorzugt geringer als 8 g/m², bevorzugt geringer als 6 g/m² und besonders bevorzugt geringer als 5 g/m².

10. Verbund (1) nach wenigstens einem der vorangegangenen Ansprüche,
**dadurch gekennzeichnet, dass**
der Verbund ein anorganisch transferbeschichtetes transparentes Papier aufweist, wobei ein Glanzwert des Verbunds in Maschinenrichtung zwischen 250 und 300, bevorzugt zwischen 260 und 290 und besonders bevorzugt zwischen 270 und 280 liegt und/oder ein Glanzwert des Verbunds in Transversalrichtung zwischen 200 und 270, bevorzugt zwischen 210 und 260, bevorzugt zwischen 220 und 250 und besonders bevorzugt zwischen 230 und 240 liegt.

11. Verbund (1) nach wenigstens einem der vorangegangenen Ansprüche,
**dadurch gekennzeichnet, dass**
der Verbund ein anorganisch transferbeschichtetes weißes Papier aufweist, wobei ein Glanzwert des Verbunds in Maschinenrichtung zwischen 840 und 930, bevorzugt zwischen 860 und 910 und besonders bevorzugt zwischen 870 und 900 liegt und/oder ein Glanzwert des Verbunds in Transversalrichtung zwischen 740 und 800, bevorzugt zwischen 750 und 790, bevorzugt zwischen 760 und 780 und besonders bevorzugt zwischen 770 und 778 liegt.

12. Verfahren zum Herstellen eines Verbundes zur Verpackung von Lebensmitteln mit den Schritten:
Zur Verfügung stellen eines Substrats mit einer daran angeordneten anorganisch beschichteten Transferbeschichtung;
Anordnen des Substrats mit der daran angeordneten Transferbeschichtung an einem Träger um einen Zwischenverbund auszubilden;
Entfernen des Substrats von dem Zwischenverbund, wobei bevorzugt der Zwischenverbund kaschiert wird.

13. Verfahren nach dem vorangegangenen Anspruch,
**dadurch gekennzeichnet, dass**
an dem Träger (2) eine Klebebeschichtung angeordnet wird.

14. Verfahren nach dem vorangegangenen Anspruch,
**dadurch gekennzeichnet, dass**
die anorganische Beschichtung von dem Substrat auf den Träger übertragen wird.
